# EUROPÄISCHE PATENTSCHRIFT

(11) **EP 3 380 415 B1**
(45) Veröffentlichungstag und Bekanntmachung des Hinweises auf die Patenterteilung: **19.02.2020**
(21) Anmeldenummer: 16801690.5
(22) Anmeldetag: 23.11.2016
(51) Int. Cl.: B65G 19/02, B65G 47/61

(54) **VORRICHTUNG ZUM BESCHICKEN VON TRANSPORTTASCHEN**
DEVICE FOR LOADING TRANSPORT BAGS
DISPOSITIF DE CHARGEMENT DE SACS DE TRANSPORT

(30) Priorität: 25.11.2015 CH 17212015
(43) Veröffentlichungstag der Anmeldung: 03.10.2018
(73) Patentinhaber: Ferag AG, 8340 Hinwil (CH)
(72) Erfinder: SIGRIST, Sergio, 8340 Hinwil (CH)
(74) Vertreter: Frei Patent Attorneys
(86) Internationale Anmeldenummer: PCT/CH2016/000147
(87) Internationale Veröffentlichungsnummer: WO 2017/088077

(56) Entgegenhaltungen:
- EP-A1- 0 638 501
- DE-A1-102008 061 685
- DE-A1-102013 205 170
- US-A- 748 576

## Beschreibung

Die Erfindung liegt auf dem Gebiet der Transport- und Fördertechnik, insbesondere der Intra-Logistik und betrifft eine Vorrichtung zum Beschicken von Transporttaschen mit einem Transportgut gemäss dem Oberbegriff nach Anspruch 1.

Ferner betrifft die Erfindung auch ein Verfahren zum Beschicken von Transporttaschen mit einem Transportgut, mittels der erfindungsgemässen Vorrichtung, wobei das Transportgut mittels der Zufördereinrichtung der Transferzone zugefördert und in die Aufnahmefächer der von der Hängefördereinrichtung der Transferzone zugeförderten Transporttaschen transferiert wird.

In automatisierten Warenlagern, weitläufigen Produktionsstätten und beim Warentransport ganz allgemein besteht der Bedarf, Güter in geeignete Behältnisse aufzunehmen, diese dann zum Beispiel über eine Hängefördereinrichtung weiter zu fördern und Zwischenspeichern oder zu ihrem Bestimmungsort zu transportieren und dort wieder zu entladen.

So ist es aus dem Stand der Technik bekannt, für den Transport der Güter Hängefördereinrichtungen mit Transporttaschen einzusetzen.

Die Publikationsschrift DE 10 2004 018 569 A1 beschreibt beispielsweise einen Hängeförderer mit einer Mehrzahl von zusammenklappbaren Sammeltaschen zum Aufnehmen und sortierenden Sammeln von Objekten, insbesondere von Kleidungsstücken. Die Sammeltasche umfasst ein Rahmengestell und einen am Rahmengestell hängenden Taschenbeutel. Die Fördertasche ist über einen am Rahmengestell angebrachten Haken am Hängeförderer aufgehängt.

Der Vorteil von Transporttaschen liegt darin, dass diese flexibel ausgebildet sind. Dadurch lässt sich das Aufnahmefach, d.h. der Taschenbeutel, komprimieren bzw. zusammendrücken lässt, z. B. durch Zusammenfalten. Die Transporttaschen erlauben auf diese Weise gegenüber beispielsweise starren Kisten eine platzsparende Güterlogistik. So lassen sich leere Transporttaschen mit zusammengedrücktem Aufnahmefach, d.h. Taschenbeutel, platzsparend lagern oder fördern. Die Aufnahmefächer brauchen erst für den Gütertransport oder die Güterlagerung raumeinnehmend expandiert zu werden.

Hängefördersysteme mit Transporttaschen weisen allerdings den Nachteil auf, dass es schwierig ist, die Transporttaschen in einem automatisierten Prozess zuverlässig mit Gütern zu beschicken. Dies liegt unter anderem daran, dass die Taschenöffnung bzw. Aufnahmeöffnung nur eine begrenzte Grösse aufweist, durch welche das Transportgut zielgerichtet in das Aufnahmefach eingeführt werden muss. Zudem werden die Transporttaschen in Hängefördersystemen in der Regel frei schwingend bzw. schwenkend gefördert, was den Transfer von Gütern in die Transporttaschen ebenfalls erschwert. D.h., es sind zusätzliche Massnahmen zur Stabilisierung der Transporttaschen notwendig.

Die Publikationsschrift DE 10 2008 061 685 A1 beschreibt eine Belade-Station für in einer Hänge-Förderanlage geförderte Transporttaschen nach dem Obergriff des Anspruchs 1. Die Belade-Station weist eine obere Zuführ-Schiene für die Transporttaschen, einen sich an die Zuführ-Schiene anschliessenden Senkrecht-Förderer zum Zuführen der Transporttaschen in eine untere Belade-Position, eine Einrichtung zum Öffnen der Transporttaschen in der Belade-Position und eine sich an den Senkrecht-Förderer anschliessende untere Abführ-Schiene zum Abführen der Transporttaschen aus der Belade-Position auf.

Bekannte Belade-Stationen weisen den Nachteil auf, dass diese aus oben genannten Gründen häufig einen aufwändigen Aufbau und einen komplexen Prozessablauf aufweisen. Der Belade-Vorgang ist entsprechend umständlich. Dies hat zur Folge, dass die Beladegeschwindigkeit unbefriedigend ist.

Es ist daher eine Aufgabe der vorliegenden Erfindung eine Vorrichtung zum Beschicken von Transporttaschen mit einem Transportgut vorzuschlagen, welche möglichst ohne Zusatzeinrichtungen auskommt.

Ferner soll die Vorrichtung ein zuverlässiges Beschicken der Transporttaschen, insbesondere auch bei vergleichsweise kleinen Aufnahmeöffnungen erlauben.

Ferner soll die Vorrichtung ein Beschicken der Transporttaschen mit vergleichsweise hoher Geschwindigkeit erlauben.

Die Aufgabe wird durch die Merkmale der unabhängigen Ansprüche 1 und 10 gelöst. Die abhängigen Ansprüche, die Beschreibung und die Figuren beinhalten besondere Ausführungsformen und Weiterbildungen der Erfindung.

Die erfindungsgemässe Vorrichtung zeichnet sich durch die Merkmale des Anspruchs 1 aus. Die Zufördereinrichtung und die Hängefördereinrichtung sind derart ausgebildet und relativ zueinander angeordnet , dass die Transporttaschen in einer liegenden Formation und in einer Transfer-Förderrichtung durch die Transferzone bewegt werden und das Transportgut mittels der Zufördereinrichtung im Wesentlichen in der Transfer-Förderrichtung, insbesondere in der Transfer-Förderrichtung, der Transporttaschen in die Transferzone gefördert und in einem Abgabebereich von oben, insbesondere mittels Schwerkraftunterstützung, an die in der Transferzone unterhalb der Zufördereinrichtung durch die Transferzone bewegten Transporttaschen abgegeben wird.

Im Wesentlichen in der Transfer-Förderrichtung bedeutet insbesondere, dass die beiden Förderrichtungen zueinander einen Winkel von weniger als 45° (Winkelgrade), insbesondere von weniger als 20° einschliessen.

Gemäss der Erfindung bildet die Taschenrückwand in der Offenstellung der Transporttasche einen über das Aufnahmefach hinaus verlängerten Rückwandabschnitt aus. Der verlängerte Rückwandabschnitt bildet in der Transferzone eine Auflagefläche für das übergebene und in das Aufnahmefach der Transporttasche aufzunehmende Transportgut aus.

Das Aufnahmefach bildet insbesondere eine Aufnahmeöffnung für das Transportgut aus. Der Rückwandabschnitt ist insbesondere in der Offenstellung der Transporttasche über die Aufnahmeöffnung hinaus verlängert.

Die Transporttasche enthält insbesondere eine Beutelwand, welche zusammen mit der Taschenrückwand das Aufnahmefach für das Transportgut ausbildet. Die Beutelwand bildet in der Transferzone insbesondere eine Auflagefläche für das in das Aufnahmefach einer nachfolgenden Transporttasche aufzunehmende Transportgut aus.

Die Transporttaschen sind jeweils insbesondere über ein Befestigungsmittel mit dem Förderorgan der Hängefördereinrichtung verbunden.

Die Hängefördereinrichtung bildet in der Transferzone insbesondere eine Taschenauflage aus, auf welcher die Transporttaschen in der Transferzone aufliegen. Die Transporttaschen liegen insbesondere derart der Taschenauflage auf, dass die Transporttaschen und insbesondere deren verlängerter Rückwandabschnitt bzw. die Beutelwand eine Auflagefläche für das vom Aufnahmefach der Transporttasche aufzunehmende Transportgut ausbildet.

Die Transferzone definiert jene Förderzone in der Vorrichtung, in welcher die Transportgüter von der Zufördereinrichtung an die Hängefördereinrichtung transferiert, d.h. abgeben bzw. übergeben werden.

Die Taschenrückwand mit dem verlängerten Rückwandabschnitt weist eine der Aufnahmeöffnung bzw. dem Aufnahmefach zugewandte Vorderseite und eine der Vorderseite gegenüber liegende und insbesondere der Taschenauflage zugewandte Rückseite auf. Die Vorderseite ist bezüglich Schwerkraftrichtung insbesondere nach oben weisend und die Rückseite nach unten weisend angeordnet.

Das Aufnahmefach ist auf der Vorderseite der Taschenrückwand angeordnet. Entsprechend wird das Aufnahmefach zur Rückseite hin durch die Taschenrückwand begrenzt. Auf der Vorderseite wird das Aufnahmefach durch die zusammendrückbare Beutelwand begrenzt.

Die Beutelwand kann zusammen mit der Taschenrückwand ein lediglich durch die Aufnahmeöffnung nach aussen offenes Aufnahmefach ausbilden. Die Beutelwand kann zusammen mit der Taschenrückwand allerdings auch ein zur Seite hin offenes Aufnahmefach ausbilden, wie dies beispielsweise in der DE 10 2008 061 685 A1 gezeigt ist.

Der verlängerten Rückwandabschnitt erstreckt sich insbesondere mindestens über die gesamte Breite des Aufnahmefachs.

Der Begriff "liegend" bedeutet insbesondere, dass die Transporttaschen in der Transferzone horizontal ausgerichtet oder gegebenenfalls in Förderrichtung geneigt sind, derart, dass das übergebene Transportgut ausserhalb des Aufnahmefachs auf der Transporttasche, insbesondere auf dem verlängerten Rückwandabschnitt, zu liegen kommen kann.

Die oben erwähnte liegende Anordnung der Transporttasche bezieht sich insbesondere auf die Ausrichtung bzw. Neigung der Taschenrückwand in Förderrichtung, insbesondere des verlängerten Rückwandabschnittes, der Transporttasche.

Die Transporttaschen können in der liegenden Anordnung in der Transferzone gegenüber einer Horizontalen auch einen Neigungswinkel von kleiner 45°, insbesondere von kleiner 20° (Winkelgrade), und ganz besonders von kleiner 10° ausbilden.

Die Neigung des verlängerten Rückwandabschnitts ist insbesondere derart, dass der verlängerte Rückwandabschnitt von seinem freien Endabschnitt zur Aufnahmeöffnung hin ein Gefälle aufweist.

Gemäss einer besonderen Ausführungsvariante sind die Transporttaschen in der Transferzone horizontal ausgerichtet.

Das Aufnahmefach ist in der Transferzone in Förderrichtung betrachtet relativ zum verlängerten Rückwandabschnitt nachlaufend. Das Aufnahmefach ist im Weiteren in der Transferzone bezogen auf die Schwerkraftrichtung oberhalb der Taschenrückwand angeordnet. Ferner ist die Aufnahmeöffnung in der Transferzone in Förderrichtung ausgerichtet.

Die Transporttaschen sind nun in der Transferzone insbesondere lückenlos aufeinanderfolgend bzw. hintereinander angeordnet. Die Transporttaschen bilden so insbesondere eine in Förderrichtung durchgängige Auflagefläche für das zu übergebende Transportgut aus.

So können die Transporttaschen in der Transferzone Stoss an Stoss hintereinander angeordnet sein.

Gemäss einer besonderen Weiterbildung sind die Transporttaschen in der Transferzone einander überlappend angeordnet. Die Transporttaschen bilden auf diese Weise insbesondere eine Schuppenformation aus. Entsprechend werden die Transporttaschen in Schuppenformation durch die Transferzone gefördert bzw. bewegt.

Gemäss einer besonderen Ausbildung der Schuppenformation liegen die Transporttaschen jeweils mit einem nachlaufenden Rückwandteil über einem vorlaufenden Rückwandteil des verlängerten Rückwandabschnitts der unmittelbar nachfolgenden Transporttasche auf.

Die Transporttaschen sind in der Transferzone insbesondere in Förderrichtung ausgerichtet.

Zwischen den Aufnahmeöffnungen zweier lückenlos hintereinander angeordneten Transporttaschen wird auf diese Weise ein Auffangbereich ausgebildet. Der Auffangbereich dient nun dem Auffangen des von der Zufördereinrichtung abgegebenen Transportguts.

Der Auffangbereich ist gegen unten insbesondere unter anderem durch den verlängerten Rückwandabschnitt begrenzt. Der verlängerte Rückwandabschnitt bildet hierbei eine erwähnte Auflagefläche für das Transportgut aus.

Auf diese Weise wird gewährleistet, dass das Transportgut in der Transferzone immer auf einer Transporttasche zu liegen kommt und nicht zwischen zwei Transporttaschen hindurch fallen kann.

Die Transporttaschen werden in Ausübung des Verfahrens in liegender Formation durch die Transferzone gefördert bzw. bewegt. Die Transporttaschen liegen hierbei insbesondere einer Taschenauflage auf.

In der Transferzone wird das Transportgut von der Zufördereinrichtung an die Transporttaschen abgegeben. Als charakteristisches Merkmal vorliegender Erfindung wird nun das Transportgut nicht direkt in die Aufnahmefächer der Transporttaschen, sondern an eine durch die Transporttasche, insbesondere durch den verlängerten Rückwandabschnitt der Transporttasche ausgebildete Auflagefläche der Transporttasche abgegeben.

Die Transporttaschen werden während der Übergabe des Transportgutes insbesondere in der Transfer-Förderrichtung weiterbewegt.

Das Aufnahmefach ist während der Übergabe des Transportgutes, d.h. in der Transferzone, insbesondere in Offenstellung.

Die Zufördereinrichtung bildet hierzu in der Transferzone den erwähnten Abgabebereich aus, an welchem das Transportgut von der Zufördereinrichtung abgebeben wird.

Die Transporttaschen werden in den Transferzone unterhalb des Abgabebereichs gefördert, derart, dass das Transportgut von oben, insbesondere mittels Schwerkraftunterstützung, von der Zufördereinrichtung an die Transporttaschen abgegeben werden kann.

Das Transportgut wird folglich den Transporttaschen von oben zugeführt und an diese abgegeben. Entsprechend liegt das Transportgut nach dem Transfer auf der Transporttasche, insbesondere auf dem verlängerten Rückwandabschnitt oder auf der Beutelwand der voraus laufenden Transporttasche auf.

Dies Übergabe des Transportgutes kann mittels einer geführten Bewegung erfolgen. Die Übergabe des Transportgutes kann auch mittels einer ungeführten Bewegung, wie z. B. eines freien Falles erfolgen.

Die durch das Transportgut beschrieben Bewegungsbahn im Abgabebereich der Zufördereinrichtung und die durch die Transporttaschen beschriebene Förderbahn in der Transferzone liegen insbesondere in einer gemeinsamen Ebene.

Ein Aufliegen des übergebenen Transportgutes auf der Transporttasche, insbesondere auf der Vorderseite des verlängerten Rückwandabschnitts, wird erst durch einen geneigten oder horizontal ausgerichteten Rückwandabschnitt möglich. Es ist selbsterklärend, dass ein vertikal ausgerichteter, verlängerter Rückwandabschnitt während einer hängenden Förderung der Transporttasche keine Auflagefläche für das Transportgut ausbilden kann.

Gemäss einer Weiterbildung der Vorrichtung weist die Hängefördereinrichtung in Förderrichtung betrachtet mittelbar oder unmittelbar im Anschluss an die Transferzone eine Aufnahmezone aus, in welcher das Transportgut von den Aufnahmefächern der Transporttaschen aufgenommen wird.

Die Transporttaschen werden in der Aufnahmezone so weitergefördert, dass das Transportgut mittels Schwerkraft in die jeweilige Transporttasche gleitet.

Das Aufnahmefach ist in der Aufnahmezone insbesondere in Offenstellung.

Die Transporttaschen werden in der Aufnahmezone in Förderrichtung insbesondere geneigt gefördert bzw. bewegt. Die Hängefördereinrichtung bildet hierzu in der Aufnahmezone insbesondere eine Taschenauflage aus, welcher die geneigt geförderten Transporttaschen aufliegen.

Die Transporttaschen können in der Aufnahmezone, insbesondere im Anschluss an eine geneigte Förderung, in eine hängende Lage gebracht werden.

Die Förderbahn der Transporttaschen verläuft in der Aufnahmezone bezogen auf die Schwerkraftrichtung insbesondere aufwärts.

Die Neigung der Transporttaschen in der Aufnahmezone in Förderrichtung ist so gewählt, dass ein ausserhalb des Aufnahmefaches auf der Transporttasche angeordnetes Transportgut, insbesondere entgegen der Förderrichtung, in das Aufnahmefach gleitet bzw. rutscht. Das Transportgut gleitet dabei insbesondere durch die Aufnahmeöffnung in das Aufnahmefach.

Das Transportgut gleitet dabei insbesondere über einen verlängerten Rückwandabschnitt in das Aufnahmefach. Die Neigung des verlängerten Rückwandabschnitts ist folglich derart, dass der verlängerte Rückwandabschnitt von seinem freien Endabschnitt zur Aufnahmeöffnung hin ein Gefälle aufweist.

Der Neigungswinkel in der Aufnahmezone kann bezogen auf eine Horizontale 70° (Winkelgrad) oder kleiner, insbesondere 60° oder kleiner sein. Der Neigungswinkel in der Aufnahmezone kann zudem 30° oder grösser, insbesondere 45° oder grösser sein.

Das Aufnahmefach ist auch in der Aufnahmezone in Förderrichtung betrachtet relativ zum verlängerten Rückwandabschnitt nachlaufend. Das Aufnahmefach ist im Weiteren bezogen auf die Schwerkraftrichtung oberhalb der Taschenrückwand angeordnet. Die Aufnahmeöffnung ist ebenfalls in Förderrichtung ausgerichtet.

Die Transporttaschen sind auch in der Aufnahmezone insbesondere lückenlos aufeinanderfolgend angeordnet. So können die Transporttaschen in der Aufnahmezone Stoss an Stoss hintereinander angeordnet sein.

Gemäss einer besonderen Ausführung der oben genannten Weiterbildung sind die Transporttaschen in der Aufnahmezone einander überlappend angeordnet. Die Transporttaschen bilden auf diese Weise insbesondere eine bereits oben beschriebene Schuppenformation aus. Entsprechend werden die Transporttaschen in Schuppenformation durch die Aufnahmezone gefordert bzw. bewegt.

Die Ausrichtung der Transporttaschen ist in der Aufnahmezone insbesondere parallel zur Förderrichtung. Entsprechend werden die Transporttaschen in Förderrichtung gezogen.

Die Aufnahmezone schliesst insbesondere unmittelbar an die Transferzone an. Die Transferzone kann insbesondere fliessend in die Aufnahmezone übergehen, so dass der Neigungswinkel der Transporttaschen unmittelbar nach der Abgabe des Transportguts zunimmt.

Es ist grundsätzlich auch denkbar, dass die Transferzone und Aufnahmezone eine gemeinsame Zone ausbilden. In diesem Fall sind die Transporttaschen bereits in der Transferzone geneigt ausgerichtet, so dass die Transportgüter unmittelbar nach ihrer Abgabe, beim Auftreffen auf die Transporttasche in das Aufnahmefach gleiten.

Die Transporttaschen liegen sowohl in der Transferzone als auch in der Aufnahmezone insbesondere mit der Rückseite ihrer Taschenrückwand der Taschenauflage auf.

Die Transporttaschen können flächig, wie z. B. vollflächig, der Taschenauflage aufliegen. Die Transporttaschen können auch abschnittsweise, wie teilflächig oder punktuell, der Taschenauflage aufliegen. Eine teilflächige oder punktuelle Auflage kann über entsprechende Auflagemittel an der Transporttasche, wie Auflagerollen oder Gleitelemente, geschehen.

Die Transporttasche liegt insbesondere mit einem nachlaufenden Taschenabschnitt der Taschenauflage auf. Entsprechend können die Auflagemittel in einem nachlaufenden Taschenabschnitt angeordnet sein.

Die Taschenauflage kann separate Führungselemente zur Abstützung der Transporttaschen umfassen. Die Führungselemente können gegenüber den Transporttaschen stationär sein. In diesem Fall dienen die Führungselement zur rollenden oder gleitenden Abstützung der Transporttaschen.

Die Führungselemente können allerdings auch mit den Transporttaschen mitbewegt werden, z. B. über einen Rundlauf.

Gemäss einer besonderen Ausführungsform wird die Taschenauflage durch Förderorgane der jeweils nachfolgenden Transporttaschen ausgebildet. Die Transporttaschen können direkt oder indirekt auf den Förderorganen aufliegen.

Die Transporttaschen werden insbesondere über die Befestigungsmittel der Förderorgane direkt oder indirekt abgestützt. Hierzu eignen sich insbesondere Befestigungsmittel, welche die aufliegenden Transporttaschen über die gesamte Breite abstützen.

Diese Ausführungsform kann insbesondere im Zusammenhang mit der Ausbildung einer Schuppenformation der Transporttaschen zum Einsatz kommen. Sie weist den grossen Vorteil auf, dass keine separaten Auflageelemente vorzusehen sind.

Gemäss einer Weiterbildung hat der verlängerte Rückwandabschnitt zusätzlich die Funktion eines Tragabschnittes. Die Befestigungsmittel sind gemäss dieser Weiterbildung insbesondere am verlängerten Rückwandabschnitt, insbesondere am freien Endabschnitt des verlängerten Rückwandabschnittes, angeordnet. Das Befestigungsmittel ist gemäss dieser Weiterbildung gegenüber dem Aufnahmefach vorlaufend angeordnet.

Das Befestigungsmittel umfasst insbesondere ein Befestigungselement, über welches die Transporttasche am Förderorgan befestigt werden kann, insbesondere lösbar befestig werden kann. Das Befestigungselement kann z. B. zum Anhängen der Transporttasche an das Förderorgan ausgelegt sein.

So kann das Befestigungselement z. B. eine Öse sein, über welche die Transporttasche am Förderorgan eingehängt wird. Das Befestigungselement kann auch ein Haken sein, über welchen die Transporttasche am Förderorgan eingehängt wird.

Ein weiterer Aspekt betrifft ferner auch eine Transporttasche für eine oben beschriebene Vorrichtung. Die Transporttasche enthält ein Aufnahmefach mit einer Aufnahmeöffnung, eine Taschenrückwand und ein Befestigungsmittel zum Verbinden der Transporttasche mit einem Förderorgan der Hängefördereinrichtung.

Die Transporttasche weist nun in ihrer Offenstellung einen über die Aufnahmeöffnung hinaus verlängerten Rückwandabschnitt zur Ausbildung einer Ablagefläche für das in die Transporttasche zu transferierende Transportgut auf.

Die Länge des verlängerten Rückwandabschnitt beträgt in der Offenstellung der Transporttasche insbesondere mindestens ein Viertel der Höhe bzw. Aufnahmetiefe des Aufnahmefachs. Die Länge des verlängerten Rückwandabschnitt kann auch mindestens ein Drittel oder mindestens die Hälfte der Höhe bzw. Aufnahmetiefe des Aufnahmefachs entsprechen. Die Höhe bzw. Aufnahmetiefe des Aufnahmefachs entspricht der Distanz zwischen Taschenboden und der Aufnahmeöffnung.

Das Aufnahmefach ist insbesondere derart ausgebildet, dass dieses eine Offenstellung und eine platzsparende Kompaktlage einnehmen kann. In der Offenstellung ist das Aufnahmefach expandiert und die Aufnahmeöffnung offen. Das Aufnahmefach bildet einen Aufnahmeraum zur Aufnahme eines Transportgutes aus. In der Kompaktlage ist das Aufnahmefach platzsparend zusammengedrückt bzw. komprimiert, z. B. zusammengefaltet, und bildet entsprechend keinen Aufnahmeraum aus.

Die Beutelwand kann hierzu teilweise oder vollständig flexibel ausgebildet sein. Die Beutelwand kann insbesondere faltbar sein.

Die Wände der Transporttasche, insbesondere die Beutelwand, können aus einem textilen Flächengebilde, wie Gewebe, bestehen oder dieses enthalten.

Die Taschenrückwand und insbesondere der verlängerte Rückwandabschnitt ist insbesondere eigenstabil ausgebildet. D.h. die Taschenrückwand besitzt insbesondere eine genügende Steifigkeit, um in horizontaler Lage ohne grossflächige Abstützung von unten eine stabile Schuppenformation ausbilden zu können.

Die Transporttasche kann im Weiteren Öffnungsmittel enthalten, über welche das Aufnahmefach, insbesondere entgegen der Schwerkraft, in die Offenstellung bewegt bzw. in dieser gehalten werden kann.

Die Öffnungsmittel können Rückstellmittel an der Transporttasche umfassen, welche mittels einer der Schwerkraft entgegenwirkenden Rückstellkraft dafür sorgen, dass das Aufnahmefach ohne Einwirken einer der Rückstellkraft entgegenwirkenden Gegenkraft, wie Anpressdruck, geöffnet und in der Offenstellung gehalten wird.

Die Rückstellelemente können zum Beispiel auf die Wände des Aufnahmefachs einwirkende federelastische Elemente, wie Federstahlelemente, sein. Diese können beispielsweise die Beutelwand von der Taschenrückwand wegdrücken.

Die Öffnungsmittel können auch ein Offenhalteelement, wie z. B. ein schwenkbarer Bügel, an der Transporttasche umfassen, welches die Transporttasche durch das Eigengewicht in eine Offenstellung überführen bzw. in dieser hält.

Die Öffnungsmittel können auch ein Offenhalteelement, wie z. B. ein schwenkbarer Bügel, an der Transporttasche umfassen, welches die Transporttasche durch eine mechanische Fixierung, wie Rastposition oder Einhakposition, in einer Offenstellung hält. Die Funktionen der beiden oben genannten Offenhalteelemente können auch kombiniert werden.

Es ist ferner auch möglich, dass die Öffnungsmittel an der Transporttasche mit einem Aktivierungsmittel der Hängefördereinrichtung zusammenwirken, um die Transporttasche in die Offenstellung zu überführen bzw. in dieser zu halten.

So kann das Öffnungsmittel ein Steuerelement, wie Steuerrolle, an der Transporttasche umfassen, welche mittels einem als Steuerkulisse ausgebildeten Aktivierungsmittel zusammenwirkt. Die Steuerkulisse ist gegenüber den Transporttaschen insbesondere stationär. Das Steuerelement kann z. B. an der Beutelwand der Transporttasche angeordnet sein. Die Steuerkulisse bewirkt nun eine Positionsänderung der Steuerrolle und entsprechend der Beutelwand relativ zur Taschenrückwand, welches zu einem Öffnen der Transporttasche führt.

Das Aktivierungsmittel können auch einen Magneten umfassen, welcher auf ein magnetisches Öffnungsmittel, wie Metallbügel, eine magnetische Kraft ausübt und so die Transporttasche in eine Offenstellung überführt bzw. in dieser hält.

Gemäss einer Weiterbildung der Transporttasche enthält diese im verlängerten Rückwandabschnitt mindestens eine und insbesondere mehrere Durchgangsöffnungen. Die Durchgangsöffnungen sind insbesondere Löcher. Die Löcher können ein Lochbild ausbilden.

Die mindestens eine Durchgangsöffnung dient zur optischen Überprüfung, ob das Fördergut noch auf dem Rückwandabschnitt angeordnet ist oder sich im Aufnahmefach befindet. Die optische Überprüfung, welche im Anschluss an die Aufnahmezone erfolgt, kann von Auge oder automatisiert mittels optoelektronischer Sensormittel, welche den Lichtdurchlass durch die mindestens eine Durchgangsöffnung erfassen, geschehen.

Wird bei dieser optischen Überprüfung eine Unregelmässigkeit festgestellt, z. B. wenn das Fördergut nicht vollständig im Aufnahmefach verstaut ist, so kann die betreffende Transporttasche über eine Ausschleuseinrichtung aus dem Förderstrom ausgeschleust werden.

Im Weiteren kann im Anschluss an die Aufnahmezone bzw. an die oben genannten optoelektronischen Sensormittel eine Ausleseeinrichtung zum Auslesen von Produktdaten aus einem am Transportgut oder an der Transporttasche angeordneten Datenträger angeordnet sein.

Die Transporttasche kann wie erwähnt Auflagemittel, wie Gleitelemente oder Auflagerollen, zur gleitenden oder rollenden Auflage der Transporttasche entlang einer Taschenauflage enthalten. Die Auflagemittel können z. B. an der Taschenrückwand, insbesondere auf ihrer Rückseite angeordnet sein. Die Auflagemittel können in Förderrichtung betrachtet, seitlich von der Transporttasche angeordnet sein.

Die Hängefördereinrichtung ist zum hängenden, insbesondere frei hängenden Fördern der Transporttaschen ausgelegt. Die Hängefördereinrichtung ist erfindungsgemäß zum einzeln hängenden Fördern der Transporttaschen ausgelegt. D.h. die Transporttaschen werden ausserhalb der Transfer- und Aufnahmezone auch hängend bzw. frei hängend gefördert.

Der Begriff "einzeln" bedeutet, dass die Transporttaschen nicht direkt miteinander verbunden, z. B. verkettet; sind.

Die Transporttaschen werden insbesondere auch einzeln durch die Transfer- und Aufnahmezone geführt.

So können die Transporttaschen im Anschluss an die Aufnahmezone, nachdem die Transportgüter in die Aufnahmefächer der Transporttaschen gerutscht sind, einzeln hängend weitergefördert werden.

Die Förderorgane umfassen ebenfalls Befestigungsmittel zum Befestigen, insbesondere lösbaren Befestigen der Transporttaschen am Förderorgan. Die Befestigungsmittel können Befestigungskörper sein. Diese können in Förderrichtung betrachtet seitlich wegführende Befestigungsarme umfassen, über welche die Transporttaschen am Förderorgan befestigt sind.

Die Befestigungsmittel der Förderorgane und Transporttaschen können so ausgelegt sein, dass diese ein Schwenken der Transporttasche relativ zum Förderorgan zulassen.

Die Förderorgane können Laufwagen sein, welche über Laufrollen entlang mindestens einer Führungsschiene rollend gefuhrt sind.

Die Laufwagen sind insbesondere als Einzelwagen ausgebildet. Dies erlaubt die individuelle Förderung der Transporttaschen. Die Laufwagen können als Aussen- oder Innenläufer ausgebildet sein.

Die Hängefördereinrichtung kann allerdings auch ein Kettenförderer sein, bei welchem die Förderorgane an einer angetriebenen Förderkette befestigt sind.

Die Zufördereinrichtung kann dazu ausgelegt sein, das Transportgut vereinzelt bzw. portioniert dem Abgabebereich zuzuführen. Das Transportgut wird hierbei jeweils vereinzelt bzw. portioniert den einzelnen Transporttaschen übergeben.

Die Zufördereinrichtung kann ein Bandförderer sein. Das Transportgut wird entsprechend auf einem Förderband dem Abgabebereich zugeführt. Der Abgabebereich kann an einer Umlenkstelle des Förderbandes angeordnet sein, an welcher das Förderband nach unten umgelenkt wird.

Auf der Förderfläche des Förderbandes können Begrenzungselemente, wie Quer- bzw. Trennleisten angeordnet sein, welche das Förderband in einzelne offene Fächer unterteilen, welche die vereinzelte bzw. portionierte Förderung des Transportgutes erlauben. Die in den Fächern zum Abgabebereich geförderten Transportgüter sind zur Abgabe an jeweils eine Transporttasche vorgesehen. D.h., das Transportgut eines Faches wird einer einzelnen Transporttasche übergeben.

Die Zufördereinrichtung und die Hängefördereinrichtung werden in der Transferzone insbesondere taktsynchron zueinander betrieben. Entsprechend werden die Fächer des Förderbandes und die Transporttaschen taktsynchron zueinander in die Transferzone bewegt.

Das Transportgut kann ein Schüttgut, wie Pulver, Granulat, Kleinteile (z. B. Schrauben), etc. sein. Das Transportgut umfasst jedoch insbesondere Stückgüter, d.h. einzelne diskrete Gegenstände. Diese Gegenstände können Haushaltsartikel, Sportartikel, Kleider, Schuhe, etc. sein.

Die erfindungsgemässe Erfindung ist insbesondere dazu ausgelegt, Transporttaschen mit einzelnen Stückgütern zu beschicken. Die Stückgüter werden hierzu einzeln von der Zufördereinrichtung der Transferzone zugefördert. So können die Stückgüter einzeln in Fächern des oben beschriebenen Bandförderers dem Abgabebereich zugefördert werden.

Die Stückgüter können beispielsweise manuell vereinzelt und der Zufördereinrichtung übergeben werden. So können die Stückgüter durch das Personal einzeln in die Fächer des Bandförderers abgefüllt werden.

Es kann eine Ausleseeinrichtung vorgesehen sein, welches bei der Übergabe der Stückgüter an die Zufördereinrichtung Informationen aus Datenträgern der Stückgütern ausliest.

Die Ausleseeinrichtung kann z. B. ein optoelektronisches Lesegerät sein, welches einen Strichcode oder einen 2D-Code, wie QR-Code, ausliest.

Die Ausleseeinrichtung kann auch zum Auslesen von RFID-Tags an den Stückgütern ausgelegt sein.

Das Auslesen von Produktinformationen bei der Übergabe der Transportgüter an die Zufördereinrichtung dient unter anderem der Nachverfolgung des Güterflusses.

Die erfindungsgemässe Vorrichtung weist den Vorteil auf, dass das Transportgut bei der Abgabe an die Hängefördereinrichtung von der Zufördereinrichtung nicht mehr mit hoher Präzision durch die Aufnahmeöffnung des Aufnahmefachs befördert werden muss.

Das Transportgut wird erst in einem nachfolgenden Schritt nach dessen Abgabe an die Hängefördereinrichtung von den Aufnahmefächern der Transporttaschen aufgenommen.

Die erfmdungsgemässe Abgabe des Transportgutes von der Zufördereinrichtung an die Hängefördereinrichtung erlaubt deshalb grössere Toleranzen, da das Transportgut bei seiner Abgabe nicht präzise durch eine Aufnahmeöffnung bewegt werden muss. Entsprechend kann das Transportgut im Transferbereich auch mit höheren Geschwindigkeiten, d.h. Taktraten, transferiert werden.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1: eine Seitenansicht einer ersten Ausführungsform einer erfindungsgemässen Vorrichtung im Bereich der Transferzone;
- Figur 2: eine Seitenansicht einer zweiten Ausführungsform einer erfindungsgemässen Vorrichtung im Bereich der Transferzone;
- Figur 3a: eine Seitenansicht einer ersten Ausführungsform einer Transporttasche mit Förderorgan;
- Figur 3b: eine Seitenansicht der Transporttasche nach Figur 3a mit einer weiteren Ausführungsform eines Förderorgans;
- Figur 4a-4c: eine Seitenansicht einer weiteren Ausführungsform einer Transporttasche;
- Figur 4d: eine perspektivische Ansicht der Transporttasche nach Figur 4a-4c;
- Figur 5: eine Seitenansicht einer weiteren Ausführungsform einer Transporttasche;
- Figur 6a: eine Seitenansicht einer weiteren Ausführungsform einer Transporttasche;
- Figur 6b: eine perspektivische Ansicht der Transporttasche nach Figur 6a;
- Figur 7: eine perspektivische Ansicht einer weiteren Ausführungsform einer Transporttasche;
- Figur 8: eine perspektivische Ansicht einer weiteren Ausführungsform einer Transporttasche.

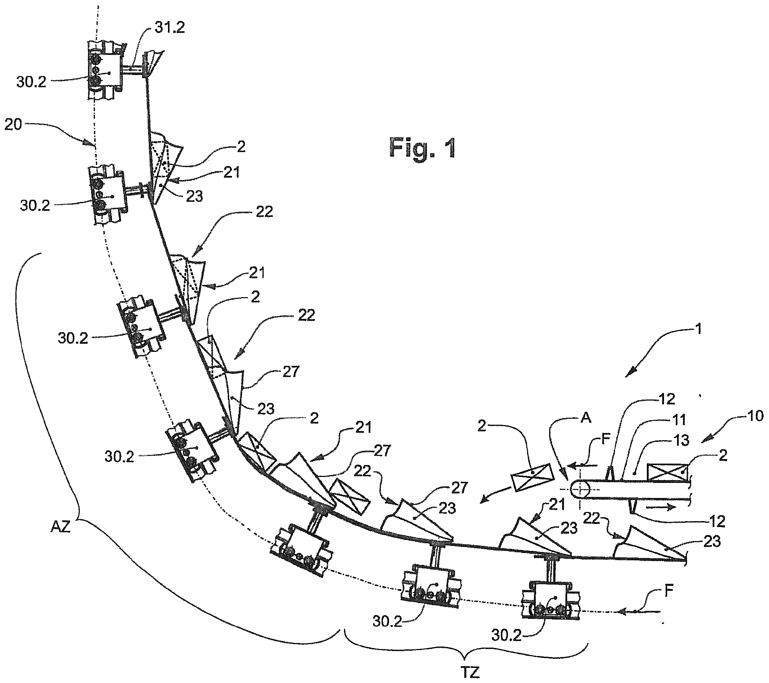

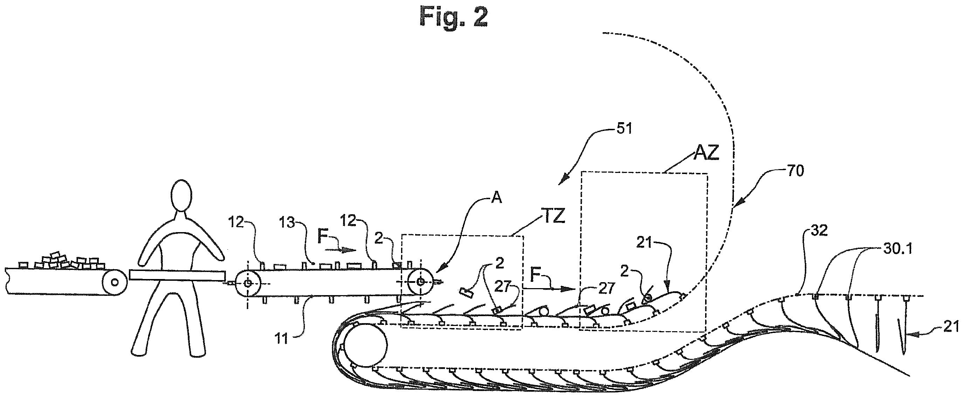

Die Vorrichtungen 1, 51 gemäss den beiden Ausführungsformen nach Figur 1 und 2 sind für den Transport bzw. die Förderung von Stückgütern 2 ausgelegt. Die Stückgüter 2 werden in den Vorrichtungen 1, 51 gemäss den beiden Ausführungsformen mittels eines Bandförderers 10 der Transferzone TZ zugefördert. Das Förderband 11 des Bandförderers 10 ist als Fächerband ausgebildet und weist Querleisten 12 auf, welche das Förderband 11 in Förderrichtung F in einzelne Fächer 13 unterteilen.

Pro Fach 13 wird jeweils ein einzelnes Stückgut 2 zur Transferzone TZ hin gefördert. Der Bandförderer 10 bildet eingangs der Transferzone TZ einen Abgabebereich A aus, in welchem die Stückgüter 2 aus den Fächern 13 abgegeben werden. Das Fächerband 11 wird im Abgabebereich A in eine Umlenkung geführt und nach unten umgelenkt. Die Stückgüter fallen auf diese Weise in der Transferzone TZ schwerkraftbedingt vom Fächerband 11 nach unten.

Die Hängefördereinrichtung 20, 70 umfasst eine Mehrzahl von Transporttaschen 21, welche jeweils an einem Laufwagen 30.1, 30.2 befestigt sind. Die Laufwagen 30.1, 30.2 sind jeweils über Laufrollen einzeln entlang einer Führungsschiene 32 geführt.

Die Transporttaschen 21 bilden jeweils ein Aufnahmefach 23 zur Aufnahme der Stückgüter 2 aus. Das Aufnahmefach 23 wird zur Rückseite hin durch eine Taschenrückwand 24 und zur Vorderseite hin durch eine Beutelwand 27 begrenzt. Das Aufnahmefach 23 bildet ferner eine Aufnahmeöffnung 22 aus.

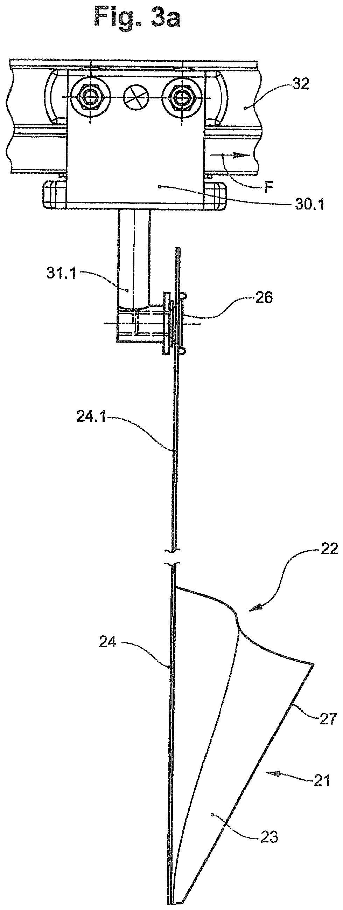

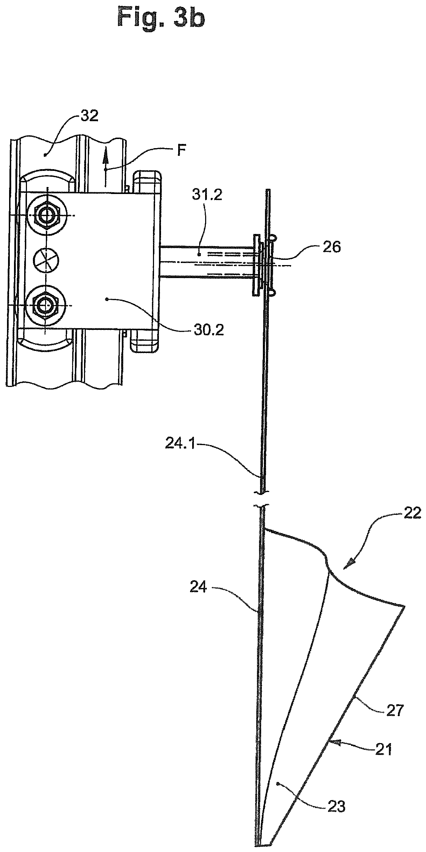

Die Transporttaschen 21 bilden ferner jeweils einen verlängerten Rückwandabschnitt 24.1 aus. Am freien Endabschnitt des verlängerten Rückwandabschnitts 24.1 sind Halteösen 26 zum Befestigen der Transporttaschen 21 am Förderorgan 30.2 angebracht. Das Aufnahmefach 23 ist zur Seite des verlängerten Rückwandabschnitts 24.1 hin geöffnet (siehe auch Figur 3a und 3b).

Die Laufwagen 30.1, 30.2 umfassen jeweils einen Befestigungskörper 31.1, 31.2 zum Befestigen der Transporttasche 21 am Laufwagen 30.1, 30.2.

Gemäss der Ausführungsform nach Figur 1 ist die Befestigung der Transporttasche 21 so ausgelegt, dass deren Taschenrückwand 24 in Förderrichtung F ausgerichtet ist.

Die Transporttaschen 21 werden nun in Schuppenformation und in horizontaler Lage unterhalb des Abgabebereichs A in die Transferzone TZ gefördert.

Gemäss der Ausführungsform nach Figur 2 ist die Befestigung der Transporttasche 21 so ausgelegt, dass deren Taschenrückwand 24 quer zur Förderrichtung F ausgerichtet ist. Die Transporttaschen 21 werden daher insbesondere in der nachfolgend noch beschriebenen Transferzone TZ und in der Aufnahmezone AZ am verlängerten Rückwandabschnitt 24.1 in eine Ausrichtung parallel zur Förderrichtung F gebogen.

Die Transporttaschen 21 werden gemäss dieser Ausführungsform entlang einer Umlenkung von unten zugefördert und unter Ausbildung einer Schuppenformation in horizontaler Lage unterhalb des Abgabebereichs A in die Transferzone TZ gefördert.

Gemäss beiden Ausführungsformen liegt in der Schuppenformation ein nachlaufender Rückwandteil der Transporttasche 21 einem vorlaufenden Rückwandteil des verlängerten Rückwandabschnittes 24.1 der unmittelbar nachfolgenden Transporttasche 21 auf.

Zwischen den Aufnahmeöffnungen 22 zweier benachbarter Transporttaschen 21 wird nun ein Auffangbereich ausgebildet, wobei der verlängerte Rückwandabschnitt 24.1 eine Auflagefläche für das Stückgut 2 ausbildet.

Die von der Zufördereinrichtung 10 im Abgabebereich A abgegebenen Stückgüter 2 fallen nun schwerkraftbedingt auf die in Schuppenformation unterhalb des Abgabebereichs A vorbei geförderten Transporttaschen 21 bzw. fallen in die von den Transporttaschen 21 in Schuppenformation ausgebildeten Auffangbereiche.

Die Stückgüter 2 fallen insbesondere auf den verlängerten Rückwandabschnitt 24.1 der Transporttaschen 21. Es ist allerdings auch möglich, dass die Stückgüter 2 teilweise oder vollständig auf die Beutelwand 27 einer jeweils vorlaufenden Transporttasche 21 fallen. In diesem Zusammenhang ist es allerdings wichtig, dass ein in eine bestimmte Transporttasche 21 zu beförderndes Stückgut 2 in Förderrichtung F betrachtet nicht vor der Aufnahmeöffnung 22 der vorlaufenden Transporttasche 21 auf die Transporttasche 21 fällt. In einem solchen Fall würde das Stückgut 2 nämlich in die vorlaufende Transporttasche 21 befördert.

Damit die Stückgüter 2 in die richtigen Auffangbereiche fallen und letztendlich in die richtigen Aufnahmefächer 23 der Transporttaschen 21 befördert werden, werden die Zufördereinrichtung 10 und die Hängefördereinrichtung 20, 70 taktsynchron zueinander betrieben.

So weisen beispielsweise die Fächer 13 des Förderbandes 11 dieselbe Länge in Förderrichtung F auf wie die Auffangbereiche der Schuppenformation der Transporttaschen 21. Die Fachlänge bzw. die Länge der Auffangbereiche kann z. B. 500 mm betragen. Dadurch können das Förderband 11 und die Transporttaschen 21 in der Transferzone TZ mit derselben Fördergeschwindigkeit bewegt werden.

Die Hängefördereinrichtung 20, 70 bildet im Anschluss an die Transferzone TZ eine Aufnahmezone AZ aus. Die Transporttaschen 21 werden in der Aufnahmezone AZ immer noch in Schuppenformation gefördert, wobei der verlängerte Rückwandabschnitt 24.1 auch hier eine Auflagefläche für das Stückgut 2 ausbildet. Der Transporttasche 21 und insbesondere der verlängerte Rückwandabschnitt 24.1 ist in der Aufnahmezone AZ allerdings geneigt und bildet zur Aufnahmeöffnung 23 hin ein Gefälle aus.

Das Stückgut 2 rutscht nun in der Aufnahmezone AZ über den verlängerten Rückwandabschnitt 24.1 in das Aufnahmefach 23 der dazugehörigen Transporttasche 21. Liegt das Stückgut 2 auf der Beutelwand 27 der voraus laufenden Transporttasche 21, so rutscht dieses zuerst von der Beutelwand 27 auf den verlängerten Rückwandabschnitt 21 der nachfolgenden Transporttasche 21 und über diesen in das Aufnahmefach 23 der nachlaufenden Transporttasche 21.

Die Transporttaschen 21 werden in ihrer horizontalen bzw. geneigten Lage, welche sie in der Transfer- TZ und Aufnahmezone AZ einnehmen, von unten durch eine Taschenauflage gestützt. Die Taschenauflage wird durch die Förderorgane 30.1, 30.2 selbst ausgebildet. D.h., die Transporttaschen 21 werden jeweils durch die Förderorgane 30.1, 30.2 der nachlaufenden Transporttaschen 21 gestützt bzw. durch deren Befestigungskörper 31.1, 31.2. Hierzu liegen die Transporttaschen 21 mit einem nachlaufenden Taschenabschnitt dem Förderorgan 30.1, 30.2 auf.

Die Transporttaschen 21 mit den Stückgütern 2 in ihren Aufnahmefächern 23 können im Anschluss an die Aufnahmezone AZ hängend weitergefördert werden.

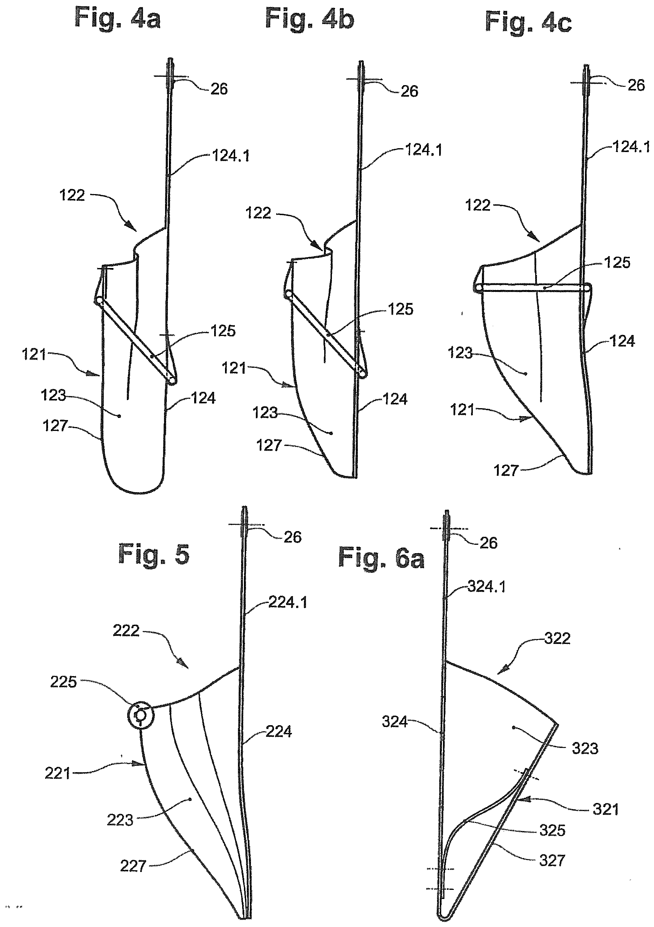

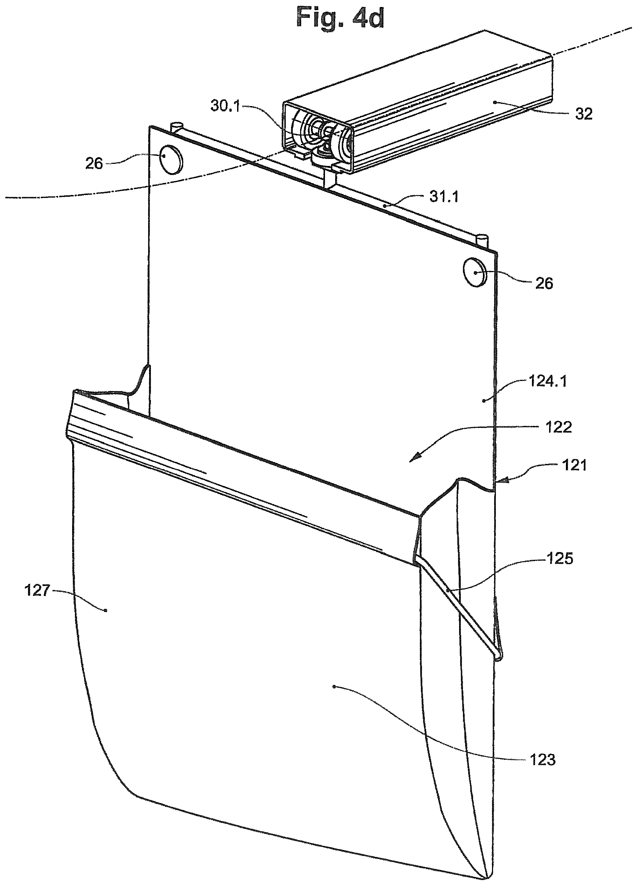

Die Transporttaschen 121, 221, 321, 421, 521 gemäss den Figuren 4a-4d, 5, 6a-6b, 7 und 8 bilden jeweils ein Aufnahmefach 123, 223, 323, 423, 523 zur Aufnahme der Stückgüter 2 aus. Das Aufnahmefach 123, 223, 323, 423, 523 wird zur Rückseite hin durch eine Taschenrückwand 124, 224, 324, 424, 524 und zur Vorderseite hin durch eine Beutelwand 127, 227, 327, 427, 527 begrenzt. Das Aufnahmefach 123, 223, 323, 423, 523 bildet ferner eine Aufnahmeöffnung 122, 222, 322, 422, 522 aus.

Die Transporttasche 121, 221, 321, 421, 521 bildet ferner einen verlängerten Rückwandabschnitt 124.1, 224.1, 324.1, 424.1, 524.1 aus. Am freien Endabschnitt des verlängerten Rückwandabschnitts 124.1, 224.1, 324.1, 424.1, 524.1 sind Halteösen 126, 226, 326, 426, 526 zum Befestigen der Transporttasche 121, 221, 321, 421, 521 an einem Förderorgan 30.2 angebracht. Das Aufnahmefach 123, 223, 323, 423, 523 ist zur Seite des verlängerten Rückwandabschnitts 124.1, 224.1, 324.1, 424.1, 524.1 hin geöffnet.

Die Transporttasche 121 gemäss der Ausführungsvariante nach Figur 4a-4d weist einen Öffnungsbügel 125 auf, welcher die Transporttasche 121 durch sein Eigengewicht sowie durch eine mechanische Fixierung in der Offenstellung offen hält.

Die Transporttasche 221 gemäss der Ausführungsvariante nach Figur 5 weist im Bereich der Aufnahmeöffnung 222 an der Beutelwand 227 eine Steuerrolle 225 auf, welche mit einer stationären Führungskulisse in der Hängefördereinrichtung (nicht gezeigt) zusammenwirkt. Je Lage der Steuerrolle 225 entlang der Führungskulisse wird das Aufnahmefach 223 in eine Offenstellung oder in eine Kompaktlage bewegt.

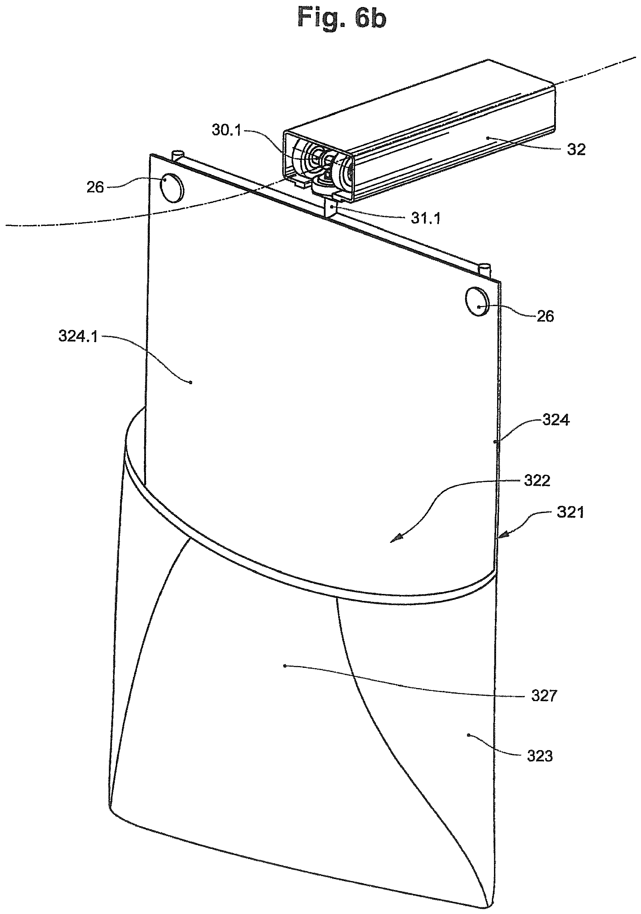

Die Transporttasche 321 gemäss der Ausführungsvariante nach Figur 6a-6b enthält im Aufnahmefach 323 ein Federstahlelement 325, welches die Beutelwand 327 aufgrund seiner Rückstellkraft in die Offenstellung drückt. Die Kompaktlage wird durch Anlegen einer Gegenkraft, z. B. mittels eines Auflagedruckes, erreicht.

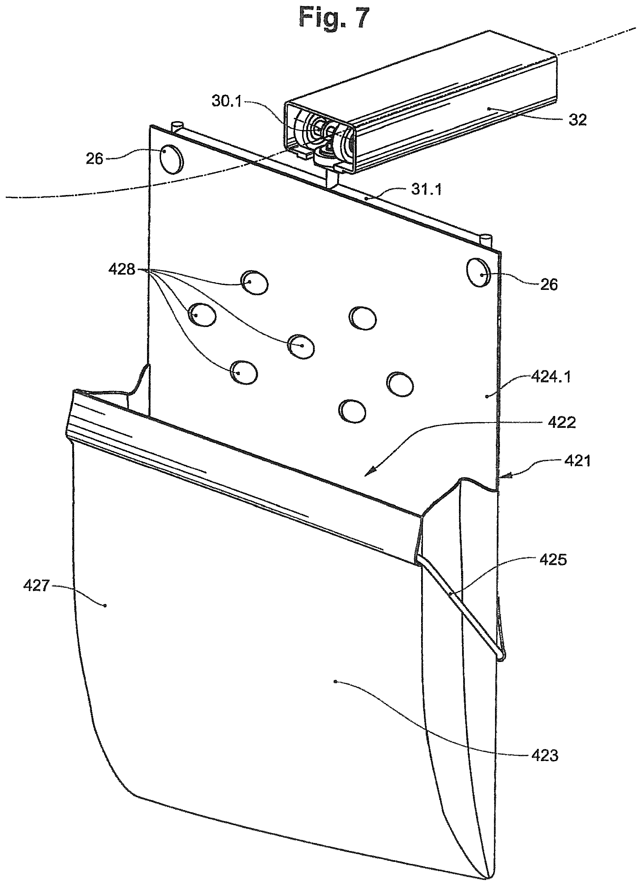

Die Figur 7 zeigt eine Transporttasche 427 gemäss Figur 4a-4d allerdings mit dem Unterschied, dass die Transporttasche 427 im verlängerten Rückwandabschnitt 424.1 ein Lochbild mit einer Mehrzahl von Löchern 428 enthält. Diese dienen der Überprüfung, ob die Stückgüter 2 in der Aufnahmezone AZ tatsächlich in die Aufnahmefächer 423 gerutscht sind.

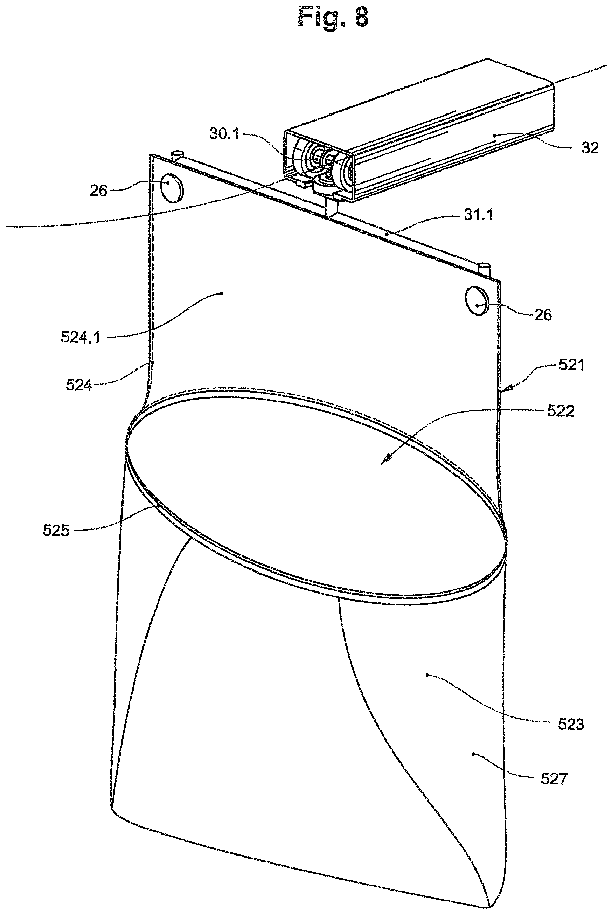

Die Transporttasche 521 gemäss der Ausführungsvariante nach Figur 8 enthält ein die Aufnahmeöffnung 522 einfassendes, streifenförmiges Rückstellelement 525, welches die Aufnahmeöffnung 522 aufgrund seiner Rückstellkraft in die Offenstellung drückt bzw. in der Offenstellung hält. Das Rückstellelement 525 weist federelastische Eigenschaften auf. Das Rückstellelement 525 kann z. B. ein Kunststoffstreifen oder ein Federstahlstreifen sein.

Die Kompaktlage wird durch Anlegen einer Gegenkraft, z. B. mittels eines Auflagedruckes, erreicht.

Die in den vorliegenden Figuren gezeigten Transporttaschen sind lediglich beispielhaft. Andere Gestaltungsvarianten von Transporttascher, sind ebenfalls möglich.

## Patentansprüche

1. Vorrichtung (1) zum Beschicken von flexiblen Transporttaschen (21) mit einem Transportgut (2), enthaltend eine Zufördereinrichtung (10) zum Zufördern des Transportguts (2) in eine Transferzone (TZ), ferner enthaltend eine Hängefördereinrichtung (20) mit einer Mehrzahl von in Förderrichtung (F) hintereinander angeordneten flexiblen Transporttaschen (21) zur Übernahme des Transportguts (2) in der Transferzone (TZ) und zum Wegfördern der beschickten Transporttaschen (21), wobei die Transporttaschen (21) jeweils ein Aufnahmefach (23) für das Transportgut (2) sowie eine Taschenrückwand (24) ausbilden, und die Transporttaschen (21) jeweils mit einem Förderorgan (30) der Hängefördereinrichtung (20) zum einzeln hängenden Fördern der Transporttaschen (21) verbunden sind,
**dadurch gekennzeichnet, dass**
die Zufördereinrichtung (10) und die Hängefördereinrichtung (20) derart ausgebildet und relativ zueinander angeordnet sind, dass die Transporttaschen (21) in einer liegenden Formation und in Transfer-Förderrichtung (F) durch die Transferzone (TZ) bewegt werden, und das Transportgut (2) mittels der Zufördereinrichtung (10) im Wesentlichen in der Transfer-Förderrichtung (F) der Transporttaschen (21) in die Transferzone (TZ) gefördert und in einem Abgabebereich (A) von oben an die unterhalb der Zufördereinrichtung (10) durch die Transferzone (TZ) bewegten Transporttaschen (21) abgegeben wird wobei die Taschenrückwand (24) in der Offenstellung der Transporttasche (21) einen über das Aufnahmefach (23) hinaus verlängerten Rückwandabschnitt (24.1) ausbildet, und der verlängerte Rückwandabschnitt (24.1) in der Transferzone (TZ) eine Auflagefläche für das in das Aufnahmefach (23) der Transporttasche (21) aufzunehmende Transportgut (2) ausbildet.

2. Vorrichtung nach Anspruch 1, **dadurch gekennzeichnet, dass** die Transporttasche (21) eine Beutelwand (27) enthält, welche zusammen mit der Taschenrückwand (24) das Aufnahmefach (23) für das Transportgut (2) ausbildet, und die Beutelwand (27) des Aufnahmefaches (23) in der Transferzone (TZ) eine Auflagefläche für das in das Aufnahmefach (23) einer nachfolgenden Transporttasche (21) aufzunehmende Transportgut (2) ausbildet.

3. Vorrichtung nach einem der Ansprüche 1 bis 2, **dadurch gekennzeichnet, dass** die Hängefördereinrichtung (20) in der Transferzone (TZ) eine Taschenauflage ausbildet, auf welcher die Transporttaschen (21) aufliegen.

4. Vorrichtung nach Anspruch 3, **dadurch gekennzeichnet, dass** die Taschenauflage durch Führungselemente oder durch jeweils nachlaufende Förderorgane (30.1, 30.2) ausgebildet wird.

5. Vorrichtung nach einem der Ansprüche 1 bis 4, **dadurch gekennzeichnet, dass** die Transporttaschen (21) in der Transferzone (TZ) unter Ausbildung einer durchgängigen Auflagefläche für das Transportgut (2) lückenlos hintereinander angeordnet sind.

6. Vorrichtung nach einem der Ansprüche 1 bis 5, **dadurch gekennzeichnet, dass** die Transporttaschen (21) in der Transferzone (TZ) einander überlappend angeordnet sind.

7. Vorrichtung nach einem der Ansprüche 1 bis 6, **dadurch gekennzeichnet, dass** die Hängefördereinrichtung (20) in Förderrichtung (F) betrachtet im Anschluss an die Transferzone (TZ) eine Aufnahmezone (AZ) ausbildet, in welcher die Transporttaschen (21) geneigt sind, so dass das Transportgut (2) über den verlängerten Rückwandabschnitt (24.1) in das Aufnahmefach (23) gleiten kann.

8. Vorrichtung nach Anspruch 7, **dadurch gekennzeichnet, dass** die Hängefördereinrichtung (20) in der Aufnahmezone (AZ) eine Taschenauflage ausbildet, welcher die Transporttaschen (21) aufliegen.

9. Vorrichtung nach einem der Ansprüche 1 bis 8, **dadurch gekennzeichnet, dass** der verlängerte Rückwandabschnitt (24.1) als Tragabschnitt wirkt, und am verlängerten Rückwandabschnitt (24.1) ein Befestigungsmittel (26) zum befestigen der Transporttasche (21) am Förderorgan (30) angeordnet ist.

10. Verfahren zum Beschicken von Transporttaschen (21) mit einem Transportgut (2) mittels einer Vorrichtung (1) gemäss einem der Ansprüche 1 bis 9, wobei das Transportgut (2) mittels der Zufördereinrichtung (10) der Transferzone (TZ) zugefördert und in die offenen Aufnahmefächer (23) der von der Hängefördereinrichtung (20) der Transferzone (TZ) zugeförderten Transporttaschen (21) übergeben wird, wobei die Transporttaschen (21) in einer liegenden Formation in Transfer-Förderrichtung (F) durch die Transferzone (TZ) bewegt werden und das Transportgut (2) mittels der Zufördereinrichtung (10) im Wesentlichen in der Transfer-Förderrichtung (F) der Transporttaschen (21) in die Transferzone (TZ) gefördert und in einem Abgabebereich (A) von oben an die unterhalb der Zufördereinrichtung (10) durch die Transferzone (TZ) bewegten Transporttaschen (21) abgegeben wird.

11. Verfahren nach Anspruch 10, **dadurch gekennzeichnet dass** die Transporttaschen (21) lückenlos hintereinander durch die Transferzone (TZ) bewegt werden und in der Transferzone (TZ) eine durchgängige Auflagefläche für das Transportgut (2) ausbilden.

12. Verfahren nach Anspruch 10 oder 11, **dadurch gekennzeichnet, dass** der verlängerte Rückwandabschnitt (24.1) und/oder die Beutelwand (27) des Aufnahmefaches (23) in der Transferzone (TZ) eine Auflagefläche für das in das Aufnahmefach (23) der Transporttasche (21) aufzunehmende Transportgut (2) ausbildet, und das Transportgut (2) in der Transferzone (TZ) von der Zufördereinrichtung (10) abgegeben und auf dem verlängerten Rückwandabschnitt (24.1) der Transporttasche (21) und/oder auf der Beutelwand (27) des Aufnahmefaches (23) der vorlaufenden Transporttasche (21) abgelegt wird.

13. Verfahren nach einem der Ansprüche 10 bis 12, **dadurch gekennzeichnet, dass** die Transporttaschen (21) auf einer Taschenauflage aufliegend durch die Transferzone (TZ) gefördert werden.

14. Verfahren nach einem der Ansprüche 10 bis 13, **dadurch gekennzeichnet, dass** die Transporttaschen (21) im Anschluss an die Abgabe des Transportgutes (2) in einer Aufnahmezone (AZ) so weitergefördert werden, dass das Transportgut (2) mittels Schwerkraft in die jeweilige Transporttasche (21) gleitet.

15. Verfahren nach Anspruch 14, **dadurch gekennzeichnet, dass** die Transporttaschen (21) in der Aufnahmezone (AZ) in eine hängende Lage gebracht werden, so dass das Transportgut (2) mittels Schwerkraft in die dazugehörigen Transporttasche (21) gleitet.

## Claims

1. An appliance (1) for charging flexible transport pockets (21) with a transport item (2), comprising a feed device (10) for feeding the transport item (2) into a transfer zone (TZ), further comprising a suspended conveying device (20) with a plurality of flexible transport pockets (21) which are arranged one after the other in the conveying direction (F) for taking over the transport item (2) in the transfer zone (TZ) and for conveying away the charged transport pockets (21), wherein the transport pockets (21) each form a receiving compartment (23) for the transport item (2), as well as a pocket rear wall (24), and the transport pockets (21) in each case are connected to a conveying member (30) of the suspended conveying device (20) for the individual, suspended conveying of the transport pockets (21),
**characterised in that**
the design of the feed device (10) and of the suspended conveying device (20) and their arrangement relative to one another is such that the transport pockets (21) are moved through the transfer zone (TZ) in a lying formation and in a transfer conveying direction (F), and the transport item (2), by way of the feed device (10), is conveyed into the transfer zone (TZ) essentially in the transfer conveying direction (F) of the transport pockets (21), and in a delivery region (A) is delivered from above onto the transport pockets (21) which are moved through the transfer zone (10) below the feed device (10), wherein
in the open position of the transport pocket (21), the pocket rear wall (24) forms a rear wall section (24.1) which is extended beyond the receiving compartment (23), and in the transfer zone (TZ), the extended rear wall section (24.1) forms a support surface for the transport item (2) which is to be received into the receiving compartment (23) of the transport pocket (21).

2. An appliance according to claim 1, **characterised in that** the transport pocket (21) comprises a pouch wall (27) which together with the pocket rear wall (27) forms the receiving compartment (24) for the transport item (2), and in the transfer zone (TZ), the pouch wall (27) of the receiving compartment (23) forms a support surface for the transport item (2) which is to be received into the receiving compartment (23) of a following transport pocket (21).

3. An appliance according to one of the claims 1 to 2, **characterised in that** in the transfer zone (TZ), the suspended conveying device (20) forms a pocket support, on which the transport pockets (21) lie.

4. An appliance according to claim 3, **characterised in that** the pocket support is formed by guide elements or by respectively following conveying members (30.1, 30.2).

5. An appliance according to one of the claims 1 to 4, **characterised in that** in the transfer zone (TZ), the transport pockets (21) are arranged successively in a gapless manner amid the formation of a continuous support surface for the transport item (2).

6. An appliance according to one of the claims 1 to 5, **characterised in that** the transport pockets (21) are arranged overlapping one another in the transfer zone (TZ).

7. An appliance according to one of the claims 1 to 6, **characterised in that** the suspended conveying device (20) forms a receiving zone (AZ) subsequently to the transfer zone (TZ) considered in the conveying direction (F), in which receiving zone the transport pockets (21) are inclined, so that the transport item (2) can slide over the extended rear wall section (24.1) into the receiving compartment (23).

8. An appliance according to claim 7, **characterised in that** in the receiving zone (AZ), the suspended conveying device (20) forms a pocket support, on which the transport pockets (21) lie.

9. An appliance according to one of the claims 1 to 8, **characterised in that** the extended rear wall section (24.1) acts as a carrying section, and a fastening means (26) for fastening the transport pocket (21) to the conveying member (30) is arranged on the extended rear wall section (24.1).

10. A method for charging transport pockets (21) with a transport item (2) by way of the appliance (1) according to one of the claims 1 to 9, wherein the transport item (2) is fed to the transfer zone (TZ) by way of the feed device (10) and is transferred into the open receiving compartments (23) of the transport pockets (21), said pockets being fed to the transfer zone (TZ) by the suspended conveying device (20), wherein
the transport pockets (21) are moved through the transfer zone (TZ) in the transfer conveying direction (F) in a lying formation and the transport item (2), by way of the feed device (10), is conveyed into the transfer zone (TZ) essentially in the transfer conveying direction (F) of the transport pockets (21) and in a delivery region (A) is delivered from above onto the transport pockets (21) which are moved through the transfer zone (TZ) below the feed device (10).

11. A method according to claim 10, **characterised in that** the transport pockets (21) are moved one after the other through the transfer zone (TZ) in a gapless manner and in the transfer zone (TZ) form a continuous support surface for the transport item (2).

12. A method according to claim 10 or 11, **characterised in that** in the transfer zone (TZ), the extended rear wall section (24.1) and/or the pouch wall (27) of the receiving compartment (23) form a support surface for the transport item (2) which is to be received into the receiving compartment (23) of the transport pocket (21), and the transport item (2) in the transfer zone (TZ) is delivered from the feed device (10) and is deposited on the extended rear wall section (24.1) of the transport pocket (21) and/or on the pouch wall (27) of the receiving compartment (23) of the transport pocket (21) which runs in front.

13. A method according to one of the claims 10 to 12, **characterised in that** the transport pockets (21) are conveyed through the transfer zone (TZ) in a manner lying on a pocket support.

14. A method according to one of the claims 10 to 13, **characterised in that** the transport pockets (21) subsequently to the delivery of the transport item (2), in a receiving zone (AZ) are conveyed further such that the transport item slides (2) into the respective transport pocket (21) on account of gravity.

15. A method according to claim 14, **characterised in that** the transport pockets (21) are brought into a hanging position in the receiving zone (AZ), so that the transport item (2) slides into the associated transport pocket (21) due to gravitational force.

## Revendications

1. Ensemble (1) pour charger dans des poches flexibles de transport (21) un produit (2) à transporter, l'ensemble contenant un dispositif d'amenée (10) qui amène le produit (2) à transporter dans une zone de transfert (TZ) et contenant en outre un dispositif de transport suspendu (20) présentant plusieurs poches de transport (21) disposées les unes derrière les autres dans une direction de transport (F) pour transférer le produit (2) à transporter dans la zone de transfert (TZ) et pour éloigner les poches de transport (21) remplies,
chacune des poches de transport (21) formant un compartiment (23) de réception du produit (2) à transporter ainsi qu'une paroi arrière (24) de poche,
chacune des poches de transport (21) étant reliée à un organe de transport (30) du dispositif de transport suspendu (20) qui transporte une à une les poches de transport (21),
**caractérisé en ce que**
le dispositif d'amenée (10) et le dispositif de transport suspendu (20) sont configurés et disposés l'un par rapport à l'autre de telle sorte que les poches de transport (21) soient déplacées à travers la zone de transfert (TZ) en formation couchée dans la direction (F) de transport de transfert,
**en ce que** le produit (2) à transporter est transporté dans la zone de transfert (TZ) au moyen du dispositif d'amenée (10), essentiellement dans la direction (F) de transport de transfert des poches de transport (21), et dans une partie de sortie (A), est transféré depuis le haut dans les poches de transport (21) déplacées à travers la zone de transfert (TZ) en dessous du dispositif d'amenée (10),
**en ce que** lorsque la poche de transport (21) est en position ouverte, la paroi arrière (24) de la poche forme une section (24.1) qui prolonge la paroi arrière au-delà du compartiment de réception (23) et
**en ce que** la section (24.1) qui prolonge la paroi arrière forme une surface de pose pour le produit (2) à transporter qui doit être repris dans le compartiment de réception (23) de la poche de transport (21).

2. Ensemble selon la revendication 1, **caractérisé en ce que** la poche de transport (21) contient une paroi de sac (27) qui forme avec la paroi arrière (24) de la poche le compartiment de réception (23) prévu pour le produit (2) à transporter et **en ce que** dans la zone de transfert (TZ), la paroi de sac (27) du compartiment de réception (23) forme une surface de pose pour le produit (2) à transporter qui doit être repris dans le compartiment de réception (23) d'une poche de transport (21) suivante.

3. Ensemble selon l'une des revendications 1 et 2, **caractérisé en ce que** dans la zone de transfert (TZ), le dispositif de transport suspendu (20) forme un support de poche sur lequel reposent les poches de transport (21).

4. Ensemble selon la revendication 3, **caractérisé en ce que** le support de poches est formé par des éléments de guidage ou par les organes de transport (30.1, 30.2) qui suivent.

5. Ensemble selon l'une des revendications 1 à 4, **caractérisé en ce que** les poches de transport (21) sont disposées les unes derrière les autres sans interruption dans la zone de transfert (TZ) en formant une surface de pose continue pour le produit (2) à transporter.

6. Ensemble selon l'une des revendications 1 à 5, **caractérisé en ce que** les poches de transport (21) se chevauchent les unes les autres dans la zone de transfert (TZ).

7. Ensemble selon l'une des revendications 1 à 6, **caractérisé en ce qu'**à la suite de la zone de transfert (TZ) dans la direction (F) de transport, le dispositif de transport suspendu (20) forme une zone de réception (AZ) dans laquelle les poches de transport (21) sont inclinées de telle sorte que le produit (2) à transporter puisse glisser sur la section (24.1) qui prolonge la paroi arrière pour pénétrer dans le compartiment de réception (23).

8. Ensemble selon la revendication 7, **caractérisé en ce que** dans la zone de réception (AZ), le dispositif de transport suspendu (20) forme un support de poches sur lequel reposent les poches de transport (21).

9. Ensemble selon l'une des revendications 1 à 8, **caractérisé en ce que** la section (24.1) qui prolonge la paroi arrière sert de section de support et **en ce qu'**un moyen de fixation (26) qui fixe la poche de transport (21) sur l'organe de transport (30) est disposé sur la section (24.1) qui prolonge la paroi arrière.

10. Procédé pour charger au moyen d'un ensemble (1) selon l'une des revendications 1 à 9 des poches de transport (21) en un produit (2) à transporter, dans lequel le produit (2) à transporter est avancé dans la zone de transfert (TZ) au moyen du dispositif d'amenée (10) et est transféré dans les compartiments de réception (23) ouverts des poches de transport (21) amenées dans la zone de transfert (TZ) par le dispositif de transport suspendu (20),
les poches de transport (21) étant déplacées à travers la zone de transfert (TZ) en formation couchée dans une direction (F) de transport de transfert et le produit (2) à transporter étant transporté dans la zone de transfert (TZ) au moyen du dispositif d'amenée (10), essentiellement dans la direction (F) de transport de transfert des poches de transport (21), et étant dans une partie de sortie (A) transféré depuis le haut dans les poches de transport (21) déplacées à travers la zone de transfert (TZ) en dessous du dispositif d'amenée (10).

11. Procédé selon la revendication 10, **caractérisé en ce que** dans la zone de transfert (TZ), les poches de transport (21) sont disposées les unes derrière les autres sans interruption en formant une surface de pose continue pour le produit (2) à transporter.

12. Procédé selon les revendications 10 ou 11, **caractérisé en ce que** la section (24.1) qui prolonge la paroi arrière et/ou la paroi de sac (27) du compartiment de réception (23) forment dans la zone de transfert (TZ) une surface de pose pour le produit (2) à transporter qui doit être repris dans le compartiment de réception (23) de la poche de transport (21) et **en ce que** le produit (2) à transporter est apporté par le dispositif d'amenée (10) dans la zone de transfert (TZ) et est déposé sur la section (24.1) qui prolonge la paroi arrière de la poche de transport (21) et/ou sur la paroi de sac (27) du compartiment de réception (23) de la poche de transport (21) précédente.

13. Procédé selon l'une des revendications 10 à 12, **caractérisé en ce que** les poches de transport (21) sont transportées à travers la zone de transfert (TZ) en reposant sur un support de poches.

14. Procédé selon l'une des revendications 10 à 13, **caractérisé en ce qu'**après le transfert du produit (2) à transporter dans une zone de réception (AZ), les poches de transport (21) poursuivent leur transport de telle sorte que le produit (2) à transporter glisse sous l'action de la gravité dans la poche de transport (21) concernée.

15. Procédé selon la revendication 14, **caractérisé en ce que** dans la zone de réception (AZ), les poches de transport (21) sont mises en position suspendue de telle sorte que le produit (2) à transporter glisse sous l'action de la gravité dans la poche de transport (21) associée.
